# EUROPÄISCHE PATENTSCHRIFT

(11) **EP 3 262 293 B1**
(45) Veröffentlichungstag und Bekanntmachung des Hinweises auf die Patenterteilung: **23.10.2019**
(21) Anmeldenummer: 16719754.0
(22) Anmeldetag: 26.02.2016
(51) Int. Cl.: F02M 55/00, F16L 19/02

(54) **VERBINDUNGSANORDNUNG FÜR ROHRE**
CONNECTING ARRANGEMENT FOR PIPES
SYSTÈME DE RACCORD POUR TUYAUX

(30) Priorität: 27.02.2015 DE 102015102877
(43) Veröffentlichungstag der Anmeldung: 03.01.2018
(73) Patentinhaber: Benteler Automobiltechnik GmbH, 33102 Paderborn (DE)
(72) Erfinder: KWAST, Thorsten, 32049 Herford (DE); MEHRING, Markus, 33165 Lichtenau (DE)
(74) Vertreter: Ksoll, Peter
(86) Internationale Anmeldenummer: PCT/DE2016/100087
(87) Internationale Veröffentlichungsnummer: WO 2016/134707

(56) Entgegenhaltungen:
- EP-A1- 2 881 578
- DE-A1- 10 020 683
- DE-A1-102004 059 909
- DE-A1-102010 004 918
- GB-A- 2 438 414
- US-B1- 6 431 608

## Beschreibung

Die Erfindung betrifft eine Verbindungsanordnung zum Anschluss einer Rohrleitung an ein Anschlussstück von Kraftstoff- oder Hydrauliksystemen, insbesondere in Kraftstoffverteilersystemen, gemäß dem Oberbegriff von Anspruch 1.

Solche Verbindungsanordnungen kommen beispielsweise in Kraftstoffverteilersystemen von Verbrennungsmotoren zur Anwendung. Bei Kraftstoffverteilersystemen sind die Druckerzeugung und die Kraftstoffeinspritzung voneinander entkoppelt. Eine Kraftstoffpumpe erzeugt kontinuierlich Druck. Dieser unabhängig von der Einspritzfolge aufgebaute Druck steht im Kraftstoffverteiler, welcher als Druckspeicher fungiert, permanent zur Verfügung. Hierzu wird der komprimierte Kraftstoff in einem Verteilerrohr gespeichert und über Abzweigleitungen verteilt den Injektoren bzw. Einspritzventilen einer Zylinderbank zur Verfügung gestellt.

Eine bekannte Verbindungsanordnung ist in der DE 196 07 521 C1 beschrieben. Dort sind an ein Verteilerrohr eine Anzahl von Gewindebuchsen angeschweißt oder gelötet. Die Gewindebuchsen weisen durchgehende Innenbohrungen auf, welche Abzweigbohrungen in der Wand des Verteilerrohrs fortsetzen. Endseitig jeder Rohrleitung ist ein Dichtkopf vorgesehen, der mittels einer auf die Gewindebuchse aufgeschraubten Überwurfmutter mit seiner Dichtfläche gegen einen Dichtsitz in der Gewindebuchse gepresst und druckdicht verspannt wird.

Eine vergleichbare Ausgestaltung zeigt der Druckleitungsanschluss gemäß der DE 44 07 306 C1. Auch die DE 10 2005 045 731 B4 und die DE 10 2005 003 519 A1 offenbaren gängige und praxistaugliche Verbindungsanordnungen für Rohre.

Die Dichtköpfe werden unter dem Einfluss der zumindest mittelbar auf die Druckfläche wirkenden Verbindungselemente mit der Dichtfläche druckdicht an einem im Anschlussstück ausgebildeten Dichtsitz zur Anlage gebracht. Üblicherweise handelt es sich bei dem Verbindungselement um eine Überwurfmutter. Die hydraulische Dichtung erfolgt durch das Anpressen des Dichtkopfes mit seiner Dichtfläche gegen den im Anschlussstück ausgebildeten Dichtsitz. Die Dichtwirkung entsteht aufgrund der Presskraft zwischen den metallischen Dichtelementen. Die Presskraft wird durch das Verbindungsmittel aufgebracht.

Problematisch bei den Verbindungsanordnungen ist ein prozesssicheres Abdichten im Zusammenbau. In der Praxis werden das Verbindungselement und das Anschlussstück unter Eingliederung der Rohrleitung mit dem Dichtkopf über eine Schraubverbindung miteinander gefügt. Hierbei wird die Schraubverbindung zumindest so weit angezogen, dass über den ganzen Dichtungsumfang zwischen Dichtfläche und Dichtsitz eine die geforderte Dichtheit gewährleistende Flächenpressung erreicht ist. Üblicherweise ist eine Überprüfung der Dichtheit der Verbindungsanordnung erforderlich. Dies ist insbesondere in Kraftstoff- oder Hydrauliksystemen für hohe Druckanwendungen der Fall.

In diesem Zusammenhang sind Systeme mit permanenter Leckageüberwachung bzw. Überprüfung des Dichtheitszustands bekannt. Die DE 10 2008 006 196 A1 sieht hierfür eine separate Leckageleitung und eine mit der Hochdruckkraftstoffleitung zusammenwirkenden Leckagedetektionsschraube vor. Auch die DE 601 17 927 T2 beschreibt eine Anordnung zum Auffinden eines Kraftstofflecks in Verbindung mit einem großen Verbrennungsmotor.

Die DE 10 2008 041 537 A1 offenbart ein Verfahren zur Überprüfung des Dichtheitszustands eines Kraftstoffinjektors, insbesondere bei einer Brennkraftmaschine.

Aus der US 6,431,608 B1 geht ein Hochdruck-Kraftstoffeinspritzrohr für einen Dieselmotor hervor mit einer Verbindungsanordnung zum Anschluss einer Rohrleitung an ein Anschlussstück. Die Rohrleitung ist mittels eines Verbindungselements an das Anschlussstück anschließbar. In dem Verbindungselement ist ein Leckagepfad vorgesehen. Dieser kann durch eine Bohrung im Verbindungselement gebildet sein.

Separate Bohrungen für Leckageleitungen und/oder Leckagedetektionsschrauben sind jedoch mechanisch aufwendig und unter Umständen störanfällig. Neben einer permanenten Leckageüberwachung, die bei großen und insbesondere im Dauereinsatz befindlichen Motoren zweckmäßig ist, sind insbesondere in der Automobilindustrie Lecksuchverfahren zur integralen Dichtheitsprüfung und Leckortung in der Fertigung bekannt. Neben Dichtheitsprüfungen mit Luft über Druckabfall oder im Wasserbad haben sich zunehmend Prüfmethoden mit Edelgas, sogenannte Schnüffeltests, etabliert. Hierbei kommt als Prüfgas insbesondere Helium zur Anwendung. Schnüffeltests erlauben eine gezielte Ortung von Leckagen mit höchster Empfindlichkeit.

In der Praxis, insbesondere in der Automobilindustrie, steht aufgrund der geringen Taktzeit in der Fertigung für die Dichtheitsprüfung nur ein begrenzter Zeitraum zur Verfügung. Demzufolge ist man generell an einer schnellen und effizienten Dichtheitsprüfung interessiert. Problematisch kann sich hierbei der Umstand auswirken, dass es durch das Anziehen des Verbindungselements gegen das Anschlussstück zu einer Abdichtung in der Verbindungsanordnung kommen kann, wobei diese Abdichtung allerdings außerhalb des eigentlichen Dichtbereichs zwischen Dichtfläche und Dichtsitz liegt. Insbesondere kann das Verbindungselement so stark auf den rückwärtigen Bereich des Dichtkopfes drücken, dass sich dort eine Abdichtung einstellt, die jedoch regelmäßig nicht dauerhaft und betriebssicher ist. Gleichwohl verhindert diese ungewollte bzw. örtlich deplatzierte Abdichtung eine Leckageortung bei der Dichtheitsprüfung.

Der Erfindung liegt daher ausgehend vom Stand der Technik die Aufgabe zugrunde, eine fertigungstechnisch vorteilhafte Verbindungsanordnung zu schaffen mit verbesserten Eigenschaften für die Dichtheitsprüfung.

Die Lösung dieser Aufgabe besteht nach der Erfindung in einer Verbindungsanordnung gemäß den Merkmalen von Anspruch 1.

Vorteilhafte Ausgestaltungen und Weiterbildungen des grundsätzlichen Erfindungsgedankens sind Gegenstand der abhängigen Ansprüche.

Die erfindungsgemäße Verbindungsanordnung umfasst eine Rohrleitung, die an ein Anschlussstück innerhalb eines Kraftstoff- oder Hydrauliksystems, insbesondere einem Kraftstoffverteilersystem, angeschlossen ist. Hierbei wird die Rohrleitung mittels eines Verbindungselements an das Anschlussstück angeschlossen. Endseitig der Rohrleitung ist ein Dichtkopf vorgesehen. Dieser kann materialeinheitlich einstückiger Bestandteil am Ende der Rohrleitung sein oder aber als separat gefertigtes Bauteil mittels eines thermischen Fügeverfahrens mit dem Ende der Rohrleitung gefügt sein. Der Dichtkopf weist eine Dichtfläche und eine auf der Rückseite des Dichtkopfs vorgesehene Druckfläche auf. Der Dichtkopf wird unter dem Einfluss des zumindest mittelbar auf die Druckfläche wirkenden Verbindungselements mit der Dichtfläche druckdicht an einen im Anschlussstück ausgebildeten Dichtsitz gepresst.

In an sich bekannter Weise ist der Dichtsitz insbesondere in einem Dichtkonus des Anschlussstücks ausgebildet.

Charakteristisch für die erfindungsgemäße Verbindungsanordnung sind ein oder mehrere Leckagepfade, die im Bereich außerhalb der Dichtfläche und des Dichtsitzes vorgesehen sind. Der bzw. die Leckagepfade fungieren als Sollleckagen und halten die Verbindungsanordnung auf der Rückseite des Dichtbereichs, also außerhalb des Dichtsitzes und der Dichtfläche freigängig. Hierdurch wird ein zuverlässiges Austreten von Prüfgas bei der Dichtheitsprüfung und Leckortung durch Schnüffeltests gewährleistet. Auf diese Weise ist sichergestellt, dass eine zuverlässige Erkennung und Aussage über die Dichtheit des Systems getroffen werden kann und zwar in einer vergleichsweisen kurzen Detektionszeit. Integriert im Fertigungsprozess lassen sich so Produktions- und/oder Montagefehler frühzeitig und zuverlässig erkennen.

Erfindungswesentlich ist, dass der oder die Leckagepfade trotz der metallischen Flächenpressung im angezogenen Zustand der Verbindungsanordnung auf der Rückseite des Dichtkopfes den Austritt von Prüfgas ermöglichen. Der erfindungsgemäße Grundgedanke stellt eine Sollleckage sicher und verkürzt signifikant die Abdrückzeit innerhalb der Prüfung, insbesondere einer Motorenprüfung im sogenannten Schnüffelverfahren bzw. -test.

Die Funktion im Dichtbereich zwischen Dichtfläche des Druckkopfs und Dichtsitz im Anschlussstück wird durch die Leckagepfade nicht beeinträchtigt. Auch ein Winkelausgleich zwischen der Achse des Dichtkopfs bzw. der Rohrleitung und der Achse des Anschlussstücks ist möglich, so dass sich der Dichtkopf relativ zum Dichtsitz ausrichten kann. Durch einen solchen Winkelausgleich kann eine Zwangslage der Rohrleitung und damit Spannungen in der Rohrleitung reduziert werden.

Eine vorteilhafte Ausführungsform der erfindungsgemäßen Verbindungsanordnung sieht vor, dass der Leckagepfad oder die Leckagepfade durch jeweils eine Ausnehmung im Verbindungselement gebildet sind. Bei dem Verbindungselement handelt es sich um eine Überwurfmutter. Die Überwurfmutter weist einen Gewindeabschnitt mit einem Innengewinde auf. Die Überwurfmutter wirkt mit einem Außengewinde am Anschlussstück zusammen. Insbesondere ist am Anschlussstück ein Gewindestutzen oder eine Gewindebuchse vorgesehen. Die Überwurfmutter weist eine innere geneigt verlaufende Druckschulter auf, welche an der Druckfläche des Dichtkopfes anliegt. Zur Verbindung wird die Überwurfmutter auf den Gewindeabschnitt des Anschlussstückes aufgeschraubt und so weit angezogen, dass über den gesamten Dichtungsumfang eine die geforderte Dichtheit gewährleistende Flächenpressung erreicht ist. Erfindungsgemäß ist vorgesehen, dass der bzw. die Leckagepfade in der Druckschulter ausgebildet ist bzw. sind.

Besonders vorteilhaft und praxiserprobt ist ein Verbindungselement in Form einer Überwurfmutter.

Eine Ausgestaltung sieht vor, dass ein oder mehrere Leckagepfade durch eine Ausnehmung in der Druckfläche des Dichtkopfs gebildet sind. Die Leckagepfade sind folglich auf der Rückseite des Dichtkopfes vorgesehen auf der der Dichtfläche gegenüberliegenden Seite des Dichtkopfes.

Besonders vorteilhaft sind mehrere Leckagepfade vorgesehen. Insbesondere sind mehrere auf einen Teilkreis versetzt zueinander angeordnete Leckagepfade vorgesehen.

Ein Aspekt der Erfindung sieht vor, dass die Leckagepfade durch Ausnehmungen gebildet sind. Hierbei kann es sich um Kerben, Nuten oder ähnliche Freimachungen handeln. Die Herstellung der Ausnehmungen ist fertigungstechnisch rationell durchführbar. Beispielsweise können Ausnehmungen in Form von Kerben oder Nuten prägetechnisch unter Materialverdrängung ebenso wie spanabhebend oder fräsend hergestellt werden. Die Ausnehmungen sind im bzw. am Verbindungselement in der Druckschulter einer Überwurfmutter ausgebildet. Weiterhin können die Ausnehmungen an bzw. in der Druckfläche des Dichtkopfes vorgesehen sein. Auch können Leckagepfade sowohl am Verbindungselement als auch am Dichtkopf vorgesehen sein und zwar jeweils in einem Bereich außerhalb der Dichtfläche und des Dichtsitzes der Verbindungsanordnung.

Eine in der Praxis besonders vorteilhafte Ausgestaltung sieht vor, dass die Leckagepfade in Längsrichtung der Rohrleitung ausgerichtet sind. Die Leckagepfade erstrecken sich in Axialrichtung der Verbindungsanordnung. Diese Maßnahme trägt zu einer hohen Qualifizierbarkeit von Leckagen bei der Dichtheitsprüfung und Leckortung einer Verbindungsanordnung bei.

Die erfindungsgemäße Verbindungsanordnung gewährleistet durch die gezielte Anordnung von Leckagepfaden außerhalb des Dichtbereichs, dass auch geringste Grenzleckraten detektiert werden können. Auf diese Weise ist eine Leckortung innerhalb des Kraftstoff- bzw. Hydrauliksystems, insbesondere an Kraftstoffverteilern von Kraftstoff-Einspritzsystemen möglich und zwar bei kurzen Zyklus- bzw. Detektionszeiten mit hoher Prüfgenauigkeit. Dementsprechend lassen sich bei der Dichtheitsprüfung und Leckortung nicht nur Poren oder Risse, also Materialfehler, an Bauteilkomponenten erkennen, sondern auch Bearbeitungs- oder Montageungenauigkeiten von Komponenten der Verbindungsanordnung.

Die Erfindung ist nachfolgend anhand von in den Zeichnungen dargestellten Ausführungsbeispielen näher beschrieben. Es zeigen:
- Figur 1: eine erfindungsgemäße Verbindungsanordnung in einer Seitenansicht;
- Figur 2: einen Schnitt durch die Verbindungsanordnung gemäß der Darstellung von Figur 1 entlang der Linie D-D;
- Figur 3: in vergrößerter Darstellung den Ausschnitt E der Figur 2;
- Figuren 4a) und b): in perspektivischer Darstellungsweise ein Verbindungselement in Form einer Überwurfmutter in zwei verschiedenen Ansichten;
- Figur 5a): eine Überwurfmutter in einer Stirnansicht;
- Figur 5b): einen Längsschnitt durch die Darstellung der Figur 5a) entlang der Linie A-A;
- Figuren 6a) bis c): einen Dichtkopf in einer perspektivischen Ansicht sowie in einer Stirnansicht und einem Längsschnitt;
- Figuren 7a) bis c): eine weitere Ausführungsform eines Dichtkopfs in einer perspektivischen Ansicht sowie in einer Stirnansicht und einem Längsschnitt und
- Figuren 8a) bis c): den Endabschnitt einer Rohrleitung mit einem Dichtkopf in einer perspektivischen Ansicht sowie in einer Stirnansicht und einem Längsschnitt.

Einander entsprechende Bauteile bzw. Bauteilkomponenten sind in allen Figuren mit den gleichen Bezugszeichen versehen.

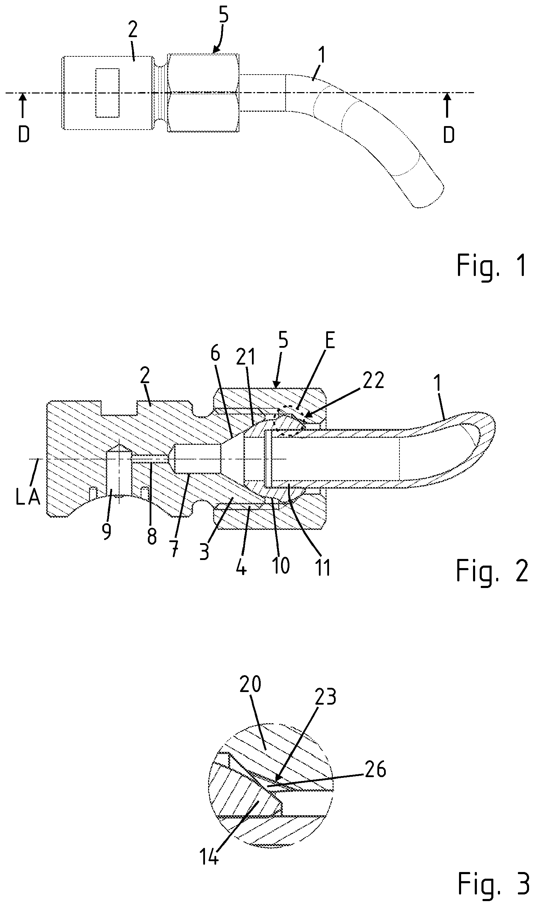

In den Figuren 1 und 2 ist eine Verbindungsanordnung zum Anschluss einer Rohrleitung 1 an ein Anschlussstück 2 dargestellt. Die Verbindungsanordnung ist Bestandteil eines Kraftstoff- oder Hydrauliksystems. Insbesondere sind die Rohrleitung 1 und das Anschlussstück 2 Bestandteil eines Kraftstoffverteilersystems, beispielsweise eines Common-Rail-Systems für Benzin oder Dieselmotoren. Hierzu ist das Anschlussstück 2 mit einem hier nicht dargestellten Verteilerrohr des Kraftstoffverteilersystems gefügt. Die Komponenten der Verbindungsanordnung bestehen aus Metall.

Zum Anschluss der Rohrleitung 1 an das Anschlussstück 2 weist das Anschlussstück 2 einen Gewindestutzen 3 mit einem Außengewinde 4 auf. Der Anschluss der Rohrleitung 1 an das Anschlussstück 2 erfolgt über ein Verbindungselement 5 in Form einer Überwurfmutter, die auf den Gewindestutzen 3 aufgeschraubt wird.

Eintrittsseitig des Gewindestutzens 3 ist ein Dichtkonus 6 ausgebildet, der durch eine Innenbohrung 7 fortgesetzt ist. An die Innenbohrung 7 schließt sich eine gegenüber dem Durchmesser der Innenbohrung 7 im Durchmesser kleinere Verbindungsbohrung 8 an, die auf eine quer zur Verbindungsbohrung 8 ausgerichtete Anschlussbohrung 9 im Anschlussstück 2 trifft.

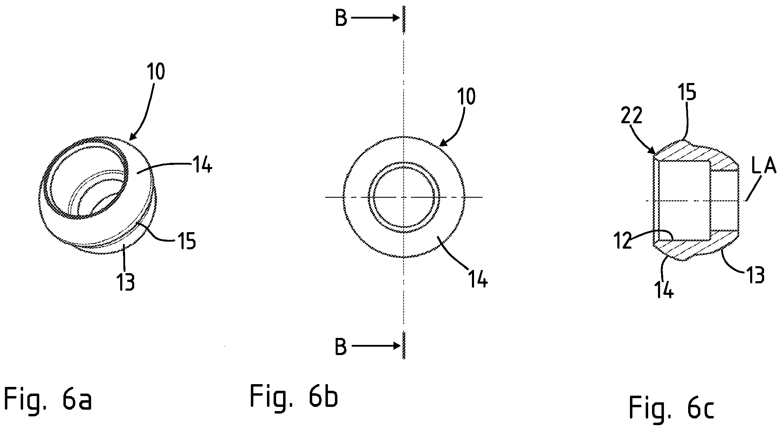

Am Ende der Rohrleitung 1 ist ein Dichtkopf 10 vorgesehen. Ein solcher Dichtkopf 10 ist näher in den Figuren 6a) bis b) zu erkennen. Bei dem Dichtkopf 10 handelt es sich um ein separates Bauteil aus Metall, welches auf das Ende 11 der Rohrleitung 1 aufgesteckt und mit der Rohrleitung 1 thermisch gefügt ist, insbesondere durch Hartlöten oder Schweißen. Zur Aufnahme des Endes 11 der Rohrleitung 1 ist im Dichtkopf 10 ein Adapterabschnitt 12 vorgesehen. Der Dichtkopf 10 weist eine vordere, insbesondere kugelabschnittsförmig bzw. beliebig konfigurierte Dichtfläche 13 sowie eine rückseitige Druckfläche 14 auf. Die Dichtfläche 13 geht über einen gerundeten Schulterkranz 15 in die rückseitige Druckfläche 14 über.

Die Überwurfmutter ist mit einer Öffnung 16 in ihrem Boden 17 über die Rohrleitung 1 geführt. Zum Anschluss der Rohrleitung 1 an das Anschlussstück 2 wird die Überwurfmutter auf das Außengewinde 4 des Gewindestutzens 3 geschraubt. Die Überwurfmutter weist einen Hülsenabschnitt 18 mit einem Innengewinde 19 auf, mit dem sie auf das Außengewinde 4 des Gewindestutzens 3 aufgeschraubt werden kann. Auf der Innenseite des Bodens 17 der Überwurfmutter ist eine geneigte Druckschulter 20 ausgebildet, welche beim Aufschrauben der Überwurfmutter an der Druckfläche 14 des Dichtkopfs 10 zur Anlage gelangt. Man erkennt, dass die Druckschulter 20 sich von der Öffnung 16 im Boden 17 in Richtung zum Hülsenabschnitt 18 hin konisch erweitert.

Bei der Herstellung der Schraubverbindung zwischen Überwurfmutter und Gewindestutzen 3 drückt die Druckschulter 20 auf die Druckfläche 14, wodurch der Dichtkopf 10 mit seiner vorderen Dichtfläche 13 gegen bzw. in den Dichtkonus 6 gepresst wird. Hierbei bildet der Dichtkonus 6 einen Dichtsitz 21, gegen den der Dichtkopf 10 mit seiner Dichtfläche 13 gespannt und druckdicht zur Anlage gelangt.

Die Verbindung zwischen Rohrleitung 1 mit ihrem endseitigen Dichtkopf 10 und dem Anschlussstück 2 über die Überwurfmutter ist dauerhaft und robust. Etwaige Montagetoleranzen oder Verzüge in den Bauteilen der Verbindungsanordnung oder nach- bzw. vorgeschalteter Bauteilkomponenten können durch die Verbindungsanordnung ausgeglichen werden. Die Dichtwirkung wird im Dichtbereich durch das Zusammenwirken bzw. Aufeinanderpressen der Dichtfläche 13 des Dichtkopfs 10 am Dichtsitz 21 des Anschlussstücks 2 gewährleistet.

Nach der Montage wird die Verbindungsanordnung einer Dichtheitsprüfung und Leckortung mittels eines Schnüffeltests unterzogen. Bei dieser Dichtheitsprüfung wird die Verbindungsanordnung bzw. das Kraftstoffsystem, zu dem die Verbindungsanordnung gehört, mit einem Prüfgas beaufschlagt. Etwaige Leckagen werden durch Schnüffelsensoren erkannt.

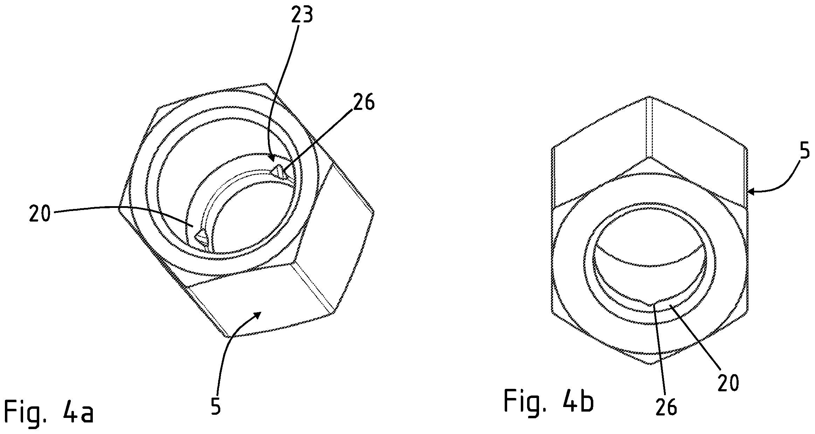

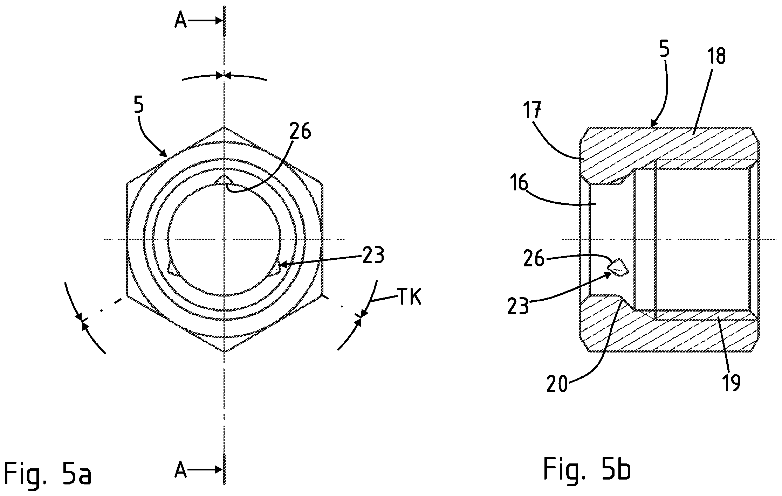

Auf der Rückseite 22 des Dichtkopfs 10 im Bereich außerhalb der Dichtfläche 13 und des Dichtsitzes 21 sind Leckagepfade 23 vorgesehen. Die Leckagepfade 23 sind bei der Ausführungsform gemäß den Figuren 2 bis 5 an bzw. in der Überwurfmutter ausgebildet. Wie insbesondere in den Figuren 3 sowie 4 und 5 zu erkennen, sind die Leckagepfade 23 in der Druckschulter 20 ausgebildet und erstrecken sich in Richtung der Längsachse LA der Verbindungsanordnung bzw. der Rohrleitung 1.

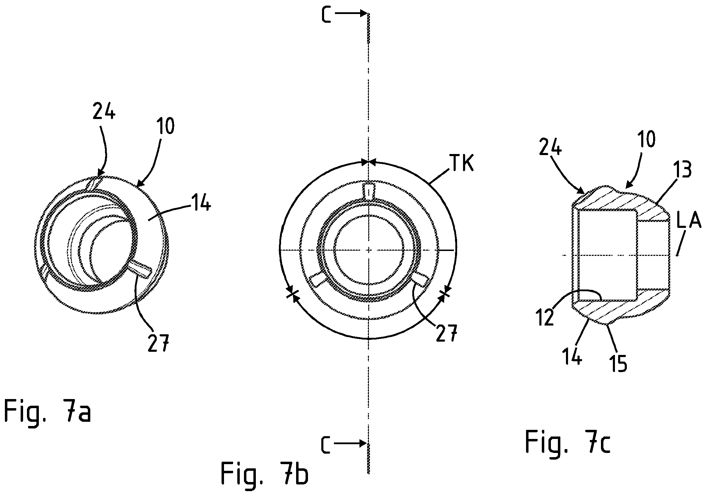

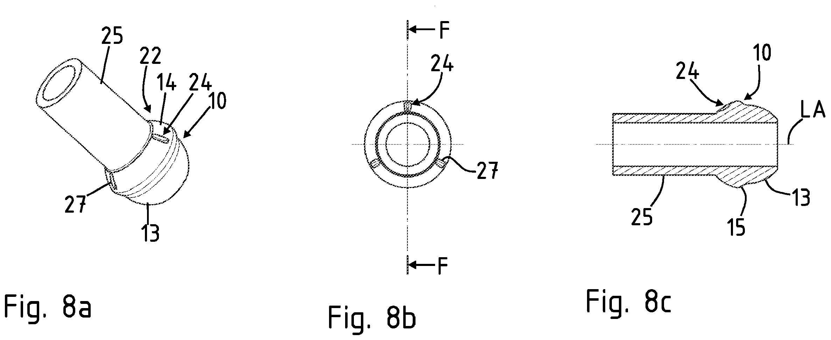

Man erkennt, dass mehrere Leckagepfade 23, nämlich drei Leckagepfade 23, auf einem Teilkreis TK in einem Winkel von 120° zueinander versetzt angeordnet sind. Die Darstellung der Figuren 7a) bis c) ebenso wie der Figuren 8a) bis c) verdeutlichen die Ausführungsform eines Dichtkopfs 10, bei der Leckagepfade 24 jeweils auf der Rückseite 22 des Dichtkopfs 10 im Bereich der Druckfläche 14 des Dichtkopfs 10 ausgebildet sind.

Die Figuren 7a) bis c) zeigen einen Dichtkopf 10, der auf das Ende 11 einer Rohrleitung 1 aufgesteckt und mittels eines thermischen Fügeverfahrens mit der Rohrleitung 1 gefügt wird.

Der in den Figuren 8a) bis c) dargestellte Dichtkopf 10 weist einen Verbindungsabschnitt 25 zum Anschluss an eine Rohrleitung 1 auf. Grundsätzlich kann der Dichtkopf 10 auch endseitig materialeinheitlich einstückig am Ende 11 einer Rohrleitung 1 durch einen Stauchvorgang ausgebildet sein.

Auch der Dichtkopf 10 gemäß der Ausführungsform der Figuren 8a) bis c) weist Leckagepfade 24 auf der Rückseite 22 des Dichtkopfs 10 auf.

Man erkennt ferner sowohl in den Figuren 7a) bis c) als auch in den Figuren 8a) bis c), dass auf dem Umfang der Druckfläche 14 drei Leckagepfade 24 vorgesehen sind, die auf einem Teilkreis TK in einem Winkel von 120° versetzt zueinander angeordnet sind.

Die Leckagepfade 23, 24 sind durch Ausnehmungen 26, 27 in Form von Nuten bzw. Kerben ausgebildet. Diese können in die Druckfläche 14 oder die Druckschulter 20 eingeprägt oder mittels eines spanabhebenden Verfahrens eingebracht sein.

Insbesondere die Figur 3 ebenso wie die Figuren 7a) bis c) und die Figuren 8a) bis c) verdeutlichen des Weiteren, dass sich die Leckagepfade 23 bzw. 24 in Richtung der Längsachse LA der Rohrleitung 1 erstrecken.

Die erfindungsgemäß vorgesehenen Leckagepfade 23, 24 auf der Rückseite 22 des Dichtkopfs 10 außerhalb des Dichtbereichs zwischen Dichtfläche 13 und Dichtsitz 21 stellen eine zuverlässige Detektion von Undichtigkeiten bzw. Leckagen bei einer Dichtheitsprüfung und Leckortung mithilfe von Schnüffeltests sicher. Sollte eine Undichtigkeit zwischen Dichtfläche 13 und Dichtsitz 21 vorhanden sein, strömt Prüfgas über und kann auf der Rückseite 22 des Dichtkopfs 10 durch die Leckagepfade 23, 24 den rückwärtigen Bereich der Verbindungsanordnung passieren, so dass das Prüfgas außerhalb der Verbindungsanordnung zuverlässig mittels Sensoren detektiert werden kann.

### Bezugszeichen:

- 1 -: Rohrleitung
- 2 -: Anschlussstück
- 3 -: Gewindestutzen
- 4 -: Außengewinde
- 5 -: Verbindungselement
- 6 -: Dichtkonus
- 7 -: Innenbohrung
- 8 -: Verbindungsbohrung
- 9 -: Anschlussbohrung
- 10 -: Dichtkopf
- 11 -: Ende von 1
- 12 -: Adapterabschnitt
- 13 -: Dichtfläche
- 14 -: Druckfläche
- 15 -: Schulterkranz
- 16 -: Öffnung
- 17 -: Boden
- 18 -: Hülsenabschnitt
- 19 -: Innengewinde
- 20 -: Druckschulter
- 21 -: Dichtsitz
- 22 -: Rückseite von 10
- 23 -: Leckagepfad
- 24 -: Leckagepfad
- 25 -: Verbindungsabschnitt
- 26 -: Ausnehmung
- 27 -: Ausnehmung

- LA -: Längsachse
- TK -: Teilkreis

## Patentansprüche

1. Verbindungsanordnung zum Anschluss einer Rohrleitung (1) an ein Anschlussstück (2) von Kraftstoff- oder Hydrauliksystemen, insbesondere Kraftstoffverteilersystemen, wobei die Rohrleitung (1) mittels eines Verbindungselements (5) an das Anschlussstück (2) anschließbar ist, wobei endseitig der Rohrleitung (1) ein Dichtkopf (10) vorgesehen ist, welcher eine Dichtfläche (13) und eine Druckfläche (14) aufweist und der Dichtkopf (10) unter dem Einfluss des zumindest mittelbar auf die Druckfläche (14) einwirkenden Verbindungselements (5) mit der Dichtfläche (13) druckdicht an einem im Anschlussstück (2) ausgebildeten Dichtsitz (21) zur Anlage gelangt, wobei in einem Bereich außerhalb der Dichtfläche (13) und des Dichtsitzes (21) wenigstens ein Leckagepfad (23, 24) vorgesehen ist, **dadurch gekennzeichnet, dass** das Verbindungselement (5) eine Überwurfmutter ist, wobei die Überwurfmutter eine innere geneigt verlaufende Druckschulter (20) aufweist, welche an der Druckfläche (14) des Dichtkopfs (10) anliegt, wobei der Leckagepfad (23) in der Druckschulter (20) ausgebildet ist.

2. Verbindungsanordnung nach Anspruch 1, **dadurch gekennzeichnet, dass** der Leckagepfad (23) durch eine Ausnehmung (26) im Verbindungselement (5) gebildet ist.

3. Verbindungsanordnung nach Anspruch 1 oder 2, **dadurch gekennzeichnet, dass** zumindest ein weiterer Leckagepfad (24) durch eine Ausnehmung (27) in der Druckfläche (14) des Dichtkopfs (10) gebildet ist.

4. Verbindungsanordnung nach wenigstens einem der Ansprüche 1 bis 3, **dadurch gekennzeichnet, dass** mehrere auf einem Teilkreis (TK) versetzt zueinander angeordnete Leckagepfade (23, 24) vorgesehen sind.

5. Verbindungsanordnung nach wenigstens einem der Ansprüche 1 bis 4, **dadurch gekennzeichnet, dass** sich der Leckagepfad (23, 24) in Richtung der Längsachse (LA) der Rohrleitung (1) erstreckt.

6. Verbindungsanordnung nach wenigstens einem der Ansprüche 1 bis 5, **dadurch gekennzeichnet, dass** der Dichtsitz (21) in einem Dichtkonus (6) des Anschlussstücks (2) ausgebildet ist.

7. Verbindungsanordnung nach wenigstens einem der Ansprüche 1 bis 6, **dadurch gekennzeichnet, dass** der oder die Leckagepfade (23, 24) als Sollleckagen fungieren und die Verbindungsanordnung auf der Rückseite des Dichtbereichs, also außerhalb des Dichtsitzes (21) und der Dichtfläche (13) freigängig halten, so dass ein zuverlässiges Austreten von Prüfgas bei der Dichtheitsprüfung und Leckortung durch Schnüffeltests gewährleistet ist.

## Claims

1. Connecting arrangement for connecting a pipeline (1) to a connection piece (2) of fuel or hydraulic systems, in particular fuel distribution systems, wherein the pipeline (1) can be connected to the connection piece (2) by means of a connecting element (5), wherein at the end of the pipeline (1) a sealing head (10) is provided which has a sealing face (13) and a pressure face (14) and the sealing head (10) under the influence of the connecting element (5) which acts at least indirectly on the pressure face (14) comes to the sealing face (13) in a pressure-tight manner on a sealing seat (21) formed in the connection piece (2), wherein at least one leakage path (23, 24) is provided in an area outside the sealing face (13) and the sealing seat (21), **characterised in that** the connecting element (5) is a union nut, wherein the union nut has an internal pressure shoulder (20) which extends in an inclined manner and bears against the pressure face (14) of the sealing head (10), wherein the leakage path (23) is formed in the pressure shoulder (20).

2. Connecting arrangement according to claim 1, **characterised in that** the leakage path (23) is formed by a recess (26) in the connecting element (5).

3. Connecting arrangement according to claim 1 or 2, **characterised in that** at least one additional leakage path (24) is formed by a recess (27) in the pressure face (14) of the sealing head (10).

4. Connecting arrangement according to at least one of claims 1 to 3, **characterised in that** several leakage paths (23, 24) are provided arranged offset with respect to one another on a pitch circle (TK).

5. Connecting arrangement according to at least one of claims 1 to 4, **characterised in that** the leakage path (23, 24) extends in the direction of the longitudinal axis (LA) of the pipeline (1).

6. Connecting arrangement according to at least one of claims 1 to 5, **characterised in that** the sealing seat (21) is formed in a sealing cone (6) of the connection piece (2).

7. Connecting arrangement according to at least one of claims 1 to 6, **characterised in that** the leakage path or paths (23, 24) act as predetermined leakages and keep the connecting arrangement free-moving on the rear side of the sealing area, i.e. outside the sealing seat (21) and the sealing face (13), so that a reliable discharge of test gas is ensured during the sealing test and leak detection by sniff tests.

## Revendications

1. Ensemble de liaison pour le raccordement d'une conduite (1) à une pièce de raccordement (2) de systèmes d'alimentation en carburant ou hydrauliques, en particulier systèmes d'injection de carburant, dans lequel la conduite (1) peut être raccordée à la pièce de raccordement (2) au moyen d'un élément de liaison (5), dans lequel, côté extrémité de la conduite (1), une tête d'étanchéité (10) est prévue, laquelle présente une surface d'étanchéité (13) et une surface de pression (14) et la tête d'étanchéité (10), sous l'effet de l'élément de liaison (5) agissant au moins indirectement sur la surface de pression (14), vient en prise avec la surface d'étanchéité (13) de manière étanche à la pression en appui contre un siège d'étanchéité (21) formé dans la pièce de raccordement (2), dans lequel au moins un chemin de fuite (23, 24) est prévu dans une zone à l'extérieur de la surface d'étanchéité (13) et du siège d'étanchéité (21), **caractérisé en ce que** l'élément de liaison (5) est un écrou-raccord, dans lequel l'écrou-raccord présente un épaulement d'étanchéité (20) intérieur s'étendant de manière inclinée, lequel s'applique contre la surface de pression (14) de la tête d'étanchéité (10), dans lequel le chemin de fuites (23) est formé dans l'épaulement d'étanchéité (20).

2. Ensemble de liaison selon la revendication 1, **caractérisé en ce que** le chemin de fuites (23) est formé par un évidement (26) dans l'élément de liaison (5).

3. Ensemble de liaison selon la revendication 1 ou 2, **caractérisé en ce qu'**au moins un autre chemin de fuites (24) est formé par un évidement (27) dans la surface de pression (14) de la tête d'étanchéité (10).

4. Ensemble de liaison selon au moins l'une des revendications 1 à 3, **caractérisé en ce que** plusieurs chemins de fuites (23, 24) disposés de manière décalée les uns des autres sur un cercle primitif (TK) sont prévus.

5. Ensemble de liaison selon au moins l'une des revendications 1 à 4, **caractérisé en ce que** le chemin de fuites (23, 24) s'étend en direction de l'axe longitudinal (LA) de la conduite (1).

6. Ensemble de liaison selon au moins l'une des revendications 1 à 5, **caractérisé en ce que** le siège d'étanchéité (21) est formé dans un cône d'étanchéité (6) de la pièce de raccordement (2).

7. Ensemble de liaison selon au moins l'une des revendications 1 à 6, **caractérisé en ce que** le ou les chemins de fuite (23, 24) fonctionnent comme des fuites théoriques et maintiennent librement l'ensemble de liaison sur la face arrière de la zone d'étanchéité, par conséquent à l'extérieur du siège d'étanchéité (21) et de la surface d'étanchéité (13), de sorte qu'une sortie sûre de gaz d'essai lors de l'essai d'étanchéité et de la localisation de fuites par des tests de reniflage est garantie.
